# EUROPÄISCHE PATENTANMELDUNG

(11) **EP 3 184 420 A1**
(43) Veröffentlichungstag der Anmeldung: **28.06.2017**
(21) Anmeldenummer: 16202943.3
(22) Anmeldetag: 08.12.2016
(51) Int. Cl.: B64C 21/04, B64C 21/08

(54) **FLUIDISCHE OSZILLATORVORRICHTUNG**

(30) Priorität: 22.12.2015 DE 102015226471
(71) Anmelder: Airbus Defence and Space GmbH, 82024 Taufkirchen (DE)
(72) Erfinder: BAUER, Karin, 82041 Oberhaching (DE); BLECHSCHMIDT, Markus, 81373 München (DE); SCHWARZ, Sebastian, 81671 München (DE); LANGENBACHER, Peter, 80807 München (DE)
(74) Vertreter: Isarpatent

(57) **Zusammenfassung**

Die vorliegende Erfindung schafft eine fluidische Oszillatorvorrichtung, insbesondere für ein oder in einem Strömungskontrollsystem für ein Luft- oder Raumfahrzeug, mit: einem ersten und einem zweiten fluidischen Aktor, wobei jeder der Aktoren einen Einlass zur Druckversorgung und einen ersten und einen zweiten Auslass aufweist, aus welchen ein Aktorstrom ausgebbar ist; und einer fluidischen Steuereinrichtung zur Steuerung einer oszillierenden Ausgabe des Aktorstroms aus dem ersten und zweiten Auslass der Aktoren, wobei die Steuereinrichtung einen Verbindungsabschnitt aufweist, welcher zwischen dem ersten Aktor und dem zweiten Aktor angeordnet ist.

## Beschreibung

Die vorliegende Erfindung betrifft eine fluidische Oszillatorvorrichtung, insbesondere für ein oder in einem Strömungskontrollsystem für ein Luft- oder Raumfahrzeug.

Die zu der vorliegenden Erfindung führenden Arbeiten haben einen Zuschuss aus dem siebten Rahmenprogramm der Europäischen Gemeinschaft FP7-AAT-2013-RTD-1 nach dem Fördervertrag Nr. 604013 erhalten.

Obwohl auf beliebige fluidische Oszillatorvorrichtungen anwendbar, werden die vorliegende Erfindung sowie die ihr zugrunde liegende Problematik in Bezug auf ein Strömungskontrollsystem für ein Luft- oder Raumfahrzeug näher erläutert.

Strömungskörper, insbesondere für Luft oder Raumfahrzeuge, müssen oftmals aerodynamische Eigenschaften für unterschiedliche Strömungszustände aufweisen.

Zur Erweiterung der Flugbereichsgrenzen eines Luft- oder Raumfahrzeugs existieren daher mechanische Lösungen für Auftriebssysteme, wie beispielsweise Vorflügel und/oder Klappen. Darüber hinaus existieren auch fluidische Lösungen, sogenannte Strömungskontrollsysteme, welche ohne mechanische Komponenten auskommen.

Ein derartiges Strömungskontrollsystem ist beispielsweise in der EP 2 650 213 A1 beschrieben. Dabei ist eine Vielzahl von Öffnungen in einer Flügeloberfläche vorgesehen, wobei die Öffnungen entlang oder parallel zu der Flügel-Vorderkante nebeneinander angeordnet sind. Durch die Öffnungen wird ein pulsierender Luftstrom ausgegeben, welcher mittels einer fluidischen Oszillatorvorrichtung bereitgestellt wird. Die pulsierende Ausgabe des Luftstroms ist dabei vorgesehen, Ablösungen der Strömung bei größeren Anstellwinkeln zu verhindern, ohne dass dazu mechanische Flügelkomponenten benötigt werden. Beispielsweise werden derartige Strömungskontrollsysteme im Steigflug eingesetzt.

Die dazu eingesetzte fluidische Oszillatorvorrichtung enthält eine Vielzahl fluidischer Aktoren (Aktoren im Sinne der Strömungslehre) mit zwei Auslässen. Die Ausgabe aus den Auslässen erfolgt oszillierend und wird mittels eines fluidischen Steuerstroms gesteuert. Dieser Steuerstrom wird durch eine entsprechend dimensionierte gemeinsame Rückkopplungsleitung hinsichtlich der Pulsationsfrequenz angepasst, wobei die gemeinsame Rückkopplungsleitung mit jedem der Aktoren verbunden ist.

Es ist nun Aufgabe der vorliegenden Erfindung eine verbesserte fluidische Oszillatorvorrichtung zu schaffen.

Erfindungsgemäß wird diese Aufgabe durch eine fluidische Oszillatorvorrichtung mit den Merkmalen des Patentanspruchs 1 gelöst.

Demgemäß ist eine fluidische Oszillatorvorrichtung, insbesondere für ein oder in einem Strömungskontrollsystem für ein Luft- oder Raumfahrzeug, vorgesehen, mit: einem ersten und einem zweiten fluidischen Aktor, wobei jeder der Aktoren einen Einlass zur Druckversorgung und einen ersten und einen zweiten Auslass aufweist, aus welchen ein Aktorstrom ausgebbar ist; und einer fluidischen Steuereinrichtung zur Steuerung einer oszillierenden Ausgabe des Aktorstroms aus dem ersten und zweiten Auslass der Aktoren, wobei die Steuereinrichtung einen Verbindungsabschnitt aufweist, welcher zwischen dem ersten Aktor und dem zweiten Aktor angeordnet ist.

Die der vorliegenden Erfindung zugrunde liegende Idee besteht darin, dass zwischen benachbarten fluidischen Aktoren eine fluidische Steuereinrichtung mit einem zwischen den fluidischen Aktoren angeordneten Verbindungsabschnitt bereitgestellt wird. Vorteilhaft kann dadurch auf eine gemeinsame Rückkopplungsleitung zur Versorgung der einzelnen Aktoren mit einem Steuerstrom verzichtet werden. Stattdessen wird mittels der Verbindungsabschnitte eine in den Aufbau bzw. die Anordnung der Aktoren integrierte fluidische Steuereinrichtung geschaffen.

Die Steuereinrichtung verbindet dabei die Aktuatoren fluidisch, sodass die fluidische Steuerung der Aktoren ermöglicht ist. Insbesondere verbindet die Steuereinrichtung die Aktoren fluidisch und mechanisch. Somit ist eine sehr kompakte Bauweise der Oszillatorvorrichtung ermöglicht.

Die Steuereinrichtung ist dabei vorzugsweise als rein fluidische Steuereinrichtung ausgebildet. Sie kommt daher insbesondere ohne mechanische Stellteile aus. Vorteilhaft ermöglicht die erfindungsgemäße Oszillatorvorrichtung somit eine platzsparende Bauweise, insbesondere ohne die Notwendigkeit externer Rückkopplungsleitungen, für die Kopplung mehrerer fluidischer Aktoren miteinander, wobei die gesamte Oszillatorvorrichtung zu resonanten Schwingungen angeregt werden kann.

Zum anderen ist die Oszillatorvorrichtung vorteilhaft auch modular mit weiteren Aktoren und weiteren Verbindungsabschnitten erweiterbar, was durch einen abwechselnden Aufbau der Aktoren und Verbindungsabschnitte der Oszillatorvorrichtung ermöglicht ist. Die Oszillatorvorrichtung ist daher universell einsetzbar.

Ferner sind erfindungsgemäß Anpassungen der Ausblas-Charakteristik, beispielsweise einer Oszillationsfrequenz und/oder eines Ausblas-Musters bzw. einer Anordnung der gleichzeitig aktiven Auslässe, aufgrund der modularen Bauweise einfach realisierbar. Insbesondere kann die Steuereinrichtung bzw. deren Verbindungsabschnitt derart ausgelegt werden, dass in einer Reihe mehrerer Aktoren eine Vielzahl von gewünschten Ausblas-Mustern generiert werden kann. Insbesondere kann die Auslegung derart vorgesehen sein, dass die an den Auslässen der Aktoren ausgegebenen Aktorströme zueinander phasenhaltig sind.

Beispielsweise kann zur Veränderung der Ausblas-Charakteristik auf einfache Weise der Verbindungsabschnitt zwischen den Aktoren ausgetauscht bzw. durch einen anderen, für die geänderte Ausblas-Charakteristik geeigneten Verbindungsabschnitt ersetzt werden.

In den Unteransprüchen finden sich vorteilhafte Ausgestaltungen und Verbesserungen der Erfindung.

Gemäß einer bevorzugten Weiterbildung umfasst die Steuereinrichtung an jedem Aktor einen Steuerkanal, wobei ein durch den Steuerkanal führbarer Steuerstrom den jeweils aktiven Auslass des Aktors bestimmt. Die Steuerkanäle weisen an den Aktoren jeweils einen ersten und einen zweiten Anschluss auf. Ferner weist der Verbindungsabschnitt einen ersten und einen zweiten Verbindungskanal auf. Die Verbindungskanäle verbinden dabei die Anschlüsse der Steuerkanäle fluidisch miteinander. Vorteilhaft ist so über die Verbindungskanäle eine direkte fluidische Verbindung der Aktoren bereitgestellt. Somit stellen die Steuerkanäle und der zwischen den Aktoren angeordnete Verbindungsabschnitt jeweils Teil einer gemeinsamen bzw. einer gemeinsam schwingfähigen fluidischen Steuereinrichtung dar, welche insbesondere als Rückkopplungseinrichtung der Oszillatorvorrichtung fungiert.

Gemäß einer vorteilhaften Ausführungsform weist der Verbindungsabschnitt ferner einen Bypasskanal auf, welcher eine fluidische Verbindung zwischen dem ersten und dem zweiten Verbindungskanal bereitstellt. Der Bypasskanal ist derart ausgebildet, dass die Aktoren und die Steuereinrichtung mit einer Oszillationsfrequenz betreibbar sind. Dabei ermöglicht die Verbindung der Verbindungskanäle über den Bypasskanal vorteilhaft die Realisierung eines fluidisch schwingfähigen Systems der gesamten Steuereinrichtung (mit Steuerkanälen, Verbindungskanälen und Bypasskanal). Vorteilhaft sind damit vielfältige Ausblas-Muster an den Auslässen der Aktoren realisierbar. Insbesondere handelt es sich bei der Oszillationsfrequenz um eine gemeinsame Oszillationsfrequenz der Aktoren und der Steuereinrichtung. Somit sind vorteilhaft synchrone Ausblas-Muster ohne Zeitversatz ermöglicht, beispielsweise gleichphasig parallel oder gleichphasig versetzte Ausblas-Muster. Besonders vorteilhaft liegen dabei bei einer Ausführungsform die den Aktorstrom steuernden Schwingungen der Steuereinrichtung phasenhaltig bzw. ohne zeitlichen Versatz an den einzelnen Aktoren an, da das schwingfähige System der Steuereinrichtung an bzw. zwischen den Aktoren synchron schwingt. Der Bypasskanal kann ferner unterschiedlichste, an eine gewünschte Steuer- und/oder Ausblas-Charakteristik angepasste Ausbildungen aufweisen. Es wäre auch denkbar, mehrere Bypasskanäle vorzusehen.

Gemäß einer Ausführungsform sind die Aktoren und der Verbindungsabschnitt als Flachteile ausgebildet. Insbesondere handelt es sich um kraftschlüssig miteinander verbunden Flachteile. Vorteilhaft sind die Aktoren und Verbindungsabschnitte somit stapelbar, insbesondere zwischenraumfrei stapelbar. Dadurch wird eine sehr kompakte Bauart bereitgestellt. Ferner kann durch den Stapel eine Formergänzung der gestapelten Elemente, insbesondere des Verbindungsabschnitts, realisiert werden. Ferner ist dadurch auch eine modulare Erweiterbarkeit der Oszillatorvorrichtung durch Erweiterung des Stapels ermöglicht. Des Weiteren erlaubt die kraftschlüssige Verbindung, die beispielsweise mittels Verbindungsbolzen vorgesehen sein kann, eine Reversibilität der Verbindung und somit eine einfache Austauschbarkeit einzelner Komponenten. Gleichzeitig wird durch die kraftschlüssige Verbindung das Kanalsystem der Steuereinrichtung geschlossen. Insbesondere wird so eine Verbindung des Steuerkanals und der Verbindungskanäle geschlossen. Ferner können sich die Aktoren und der Verbindungsabschnitt zur Ausbildung des Kanalsystems ergänzen, insbesondere zur Ausbildung des Bypasskanals und/oder der Verbindungskanäle. Alternativ oder zusätzlich wäre auch eine formschlüssige oder stoffschlüssige Verbindung der Flachteile denkbar. Ferner wäre auch denkbar, dass lediglich einer oder beide Aktoren als Flachteile ausgebildet sind oder lediglich der Verbindungsabschnitt als Flachteil ausgebildet ist.

Gemäß einer vorteilhaften Weiterbildung ist der Bypasskanal als in den als Flachteil ausgebildeten Verbindungsabschnitt eingebrachte Nut ausgebildet. Vorteilhaft ist der Verbindungsabschnitt mit dem Bypasskanal daher ohne Hinterschneidungen gestaltet und somit einfach fertigbar, beispielsweise mit einem Zerspannungsverfahren, 3D-Druck (ALM), Spritzguss oder Lasersintern. Insbesondere wird die Nut durch die Stapelung mit den Aktoren zu einem Kanal geschlossen.

Gemäß einer weiteren Weiterbildung verläuft die Nut sowohl an einer ersten als auch an einer zweiten Seite des Flachteils, wobei ein Durchtritt durch das Flachteil vorgesehen ist. Somit können vorteilhaft die Länge und das Volumen des Bypasskanals größer als bei einer einseitigen Ausbildung ausgebildet sein. Vorteilhaft kann der Bypasskanal somit in einem breiteren Bereich zur Einstellung einer gewünschter Ausblas-Charakteristiken, insbesondere unterschiedlicher Oszillationsfrequenzen der Oszillatorvorrichtung, angepasst werden.

Gemäß einer noch weiteren Weiterbildung beschreibt der Bypasskanal zumindest eine Kurve. Insbesondere kann der Bypasskanal eine Mehrzahl serpentinenartig angeordneter Kurven beschreiben. Eine derartige Kurve kann insbesondere als 180° Kurve ausgebildet sein. Andere Kurvenwinkel sind ebenfalls möglich. Die Kurve kann auch zur Ausbildung einer Schleife, insbesondere einer 180°-Schleife, des Bypasskanals vorgesehen sein. Mehrere Kurven des Bypasskanals können auch in unterschiedliche Raumrichtungen und/oder als Durchtritt durch den Verbindungsabschnitt hindurch verlaufen. Vorteilhaft kann somit eine vergrößerte Länge des Bypasskanals realisiert werden.

Gemäß einer Ausführungsform ist der erste Anschluss des Steuerkanals an einer ersten Seite des jeweiligen Aktors und der zweite Anschluss des Steuerkanals an einer zweiten Seite des jeweiligen Aktors angeordnet. Der Einlass ist dabei beispielsweise zentral an dem Aktor angeordnet und mündet in eine gemeinsame Kammer, aus welcher der erste und zweite Auslass des Aktors in unterschiedlichen Richtungen mit entgegengesetzter Querkomponente heraus geführt sind. Der Steuerkanal ist beispielsweise derart angeordnet, dass der Steuerstrom quer durch die Kammer hindurch tritt und dadurch je nach Stromrichtung des Steuerstroms bestimmt, aus welchem der Auslässe der Aktorstrom austritt. Die Anschlüsse des Steuerkanals sind vorzugsweise in Stapelrichtung, das heißt in Richtung zum Verbindungsabschnitt, ausgerichtet.

Bei einer Ausführungsform ist dabei der erste Anschluss des Steuerkanals des ersten Aktors über den ersten Verbindungskanal des Verbindungsabschnitts mit dem ersten Anschluss des Steuerkanals des zweiten Aktors verbunden. Alternativ oder zusätzlich ist der zweite Anschluss des Steuerkanals des ersten Aktors über den zweiten Verbindungskanal des Verbindungsabschnitts mit dem zweiten Anschluss des Steuerkanals des zweiten Aktors verbunden. Somit ist eine parallele Verschaltung der Steuerkanäle bereitgestellt. Vorteilhaft können damit insbesondere gleichläufige Ausblas-Muster realisiert werden.

Bei einer Weiterbildung führt der erste Verbindungskanal an einer ersten Seite des Verbindungsabschnitts durch den Verbindungsabschnitt. Alternativ oder zusätzlich führt der zweite Verbindungskanal an einer zweiten Seite des Verbindungsabschnitts durch den Verbindungsabschnitt. Dabei kann der Verbindungskanal vorteilhaft mit einer einfach herstellbaren Bohrung realisiert sein. Insbesondere kann es sich bei dem ersten und zweiten Verbindungskanal um zwei parallele Bohrungen handeln.

Gemäß einer weiteren Ausführungsform ist der erste Anschluss des Steuerkanals des ersten Aktors über den ersten Verbindungskanal des Verbindungsabschnitts mit dem zweiten Anschluss des Steuerkanals des zweiten Aktors verbunden. Alternativ oder zusätzlich ist hier der zweite Anschluss des Steuerkanals des ersten Aktors über den zweiten Verbindungskanal des Verbindungsabschnitts mit dem ersten Anschluss des Steuerkanals des zweiten Aktors verbunden. Somit ist eine diagonale bzw. Über-Kreuz-Verschaltung der Steuerkanäle bereitgestellt. Vorteilhaft können damit insbesondere gegenläufige Ausblas-Muster an den Auslässen realisiert werden.

Dabei sieht eine Weiterbildung vor, dass der erste Verbindungskanal von einer ersten Seite des Verbindungsabschnitts zu einer zweiten Seite durch den Verbindungsabschnitt führt. Alternativ oder zusätzlich führt der zweite Verbindungskanal von der zweiten Seite des Verbindungsabschnitts zu der ersten Seite durch den Verbindungsabschnitt. Somit verlaufen die Verbindungskanäle diagonal bzw. über Kreuz jeweils von einer Vorderseite zu einer Rückseite des Verbindungsabschnitts. Beispielsweise ist dies realisierbar, in dem der erste Verbindungskanal in Form einer Nut von der ersten Seite des Verbindungsabschnitts in eine erste Richtung verläuft und an einer mit ausreichenden Abstand zum zweiten Verbindungskanal vorgesehenen Stelle, beispielsweise mittig, durch das Flachteile des Verbindungsabschnitts mit einem Durchtritt auf die Rückseite gebildet ist. Auf der Rückseite verläuft die Nut weiter zu der zweiten Seite des Verbindungsabschnitts. Entsprechend verläuft der zweite Verbindungskanal als Nut von der zweiten Seite des Verbindungsabschnitt in eine zweite Richtung mit einem Durchtritt an einer mit ausreichendem Abstand zum ersten Verbindungskanal vorgesehenen Stelle, beispielsweise mittig, durch das Flachteil des Verbindungsabschnitts. Auf der Rückseite verläuft der zweite Verbindungskanal dann als Nut von dem Durchtritt zur ersten Seite des Verbindungsabschnitts. Vorteilhaft ist so eine diagonale Verschaltung der Aktoren ermöglicht, ohne dass diese zusätzlichen Bauraum benötigt.

Gemäß einer vorteilhaften Ausführungsform sind zumindest ein dritter fluidischer Aktor und zumindest ein zweiter Verbindungsabschnitt vorgesehen, wobei der zweite Verbindungsabschnitt zwischen dem zweiten Aktor und dem dritten Aktor angeordnet ist und diese fluidisch miteinander verbindet. Es handelt sich somit um eine um einzelne Aktoren modular erweiterbare Oszillatorvorrichtung. Eine Erweiterbarkeit mit einem vierten, fünften und/oder weiteren Aktor und einem dritten, vierten oder weiteren Verbindungsabschnitt ist möglich.

Alternativ oder zusätzlich können auch eine Mehrzahl weiterer fluidischer Aktoren und eine Mehrzahl weiterer Verbindungsabschnitte vorgesehen sein, wobei jeweils einer der weiteren Verbindungsabschnitte zwischen jeweils zwei der weiteren Aktoren angeordnet ist und diese fluidisch miteinander verbindet. Dabei können insbesondere Pakete erster und zweiter Aktoren, jeweils verbunden über einen Verbindungsabschnitt, miteinander gestapelt werden. Vorteilhaft ist somit eine modulare Erweiterbarkeit der Oszillatorvorrichtung um eine beliebige Anzahl an derartigen Paketen möglich.

Gemäß einer vorteilhaften Ausführungsform weist bei zumindest einem der Aktoren einer der ersten und der zweiten Auslässe eine Startauslass-Ausbildung auf, welche den Aktorstrom bei Beginn einer Druckbeaufschlagung des Aktors durch diesen Auslass austreten lässt. Bei Beginn der Druckbeaufschlagung liegt noch kein Steuerstrom in der Steuereinrichtung vor, da der Steuerstrom erst durch den Aktorstrom angeregt und so die Steuereinrichtung in fluidische Schwingung versetzt wird. Die Startauslass-Ausbildung definiert daher einen Startzustand des Aktorstroms. Insbesondere tritt der Aktorstrom bei Beginn der Druckbeaufschlagung, das heißt ohne Anliegen eines Steuerstroms, überwiegend aus dem mit der Startauslass-Ausbildung versehenen Auslass aus. Es handelt sich somit um einen bevorzugten Auslass. Auch ein vollständiges Austreten aus diesem Auslass ohne Anliegen eines Steuerstroms wäre denkbar. Auf diese Weise sind mehrere Aktoren und/oder mehrere Oszillatorvorrichtungen vorteilhaft miteinander synchronisierbar.

Gemäß einer Weiterbildung umfasst die Startauslass-Ausbildung einen geringeren fluidischen Widerstand als die Ausbildung des anderen Auslasses des Aktors. Insbesondere kann es sich bei der Startauslass-Ausbildung um einen größeren passierbaren Querschnitt handeln. Die Startauslass-Ausbildung kann insbesondere in eine auf den Aktor aufgesetzte Düsenanordnung integriert sein. Alternativ oder zusätzlich wäre es auch denkbar, in der Kammer des Aktors ein die Startauslass-Ausbildung darstellendes oder unterstützendes Strömungsleitelement und/oder eine den Auslass ohne Anliegen eines Steuerstroms bevorzugende Form des Auslasses selbst vorzusehen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die Erfindung wird im Folgenden anhand von Ausführungsbeispielen unter Bezugnahme auf die beiliegenden Figuren der Zeichnung näher erläutert. Die Elemente der Zeichnungen sind nicht notwendigerweise maßstabsgetreu zueinander gezeigt.

Von den Figuren zeigen:
- Fig. 1: eine schematisch dargestellte Oszillatorvorrichtung;
- Fig. 2: eine schematisch dargestellte Oszillatorvorrichtung gemäß einer weiteren Ausführungsform;
- Fig. 3: eine perspektivisch dargestellte Anordnung zweier Aktoren mit einer schematischen Darstellung der Verschaltung des Verbindungsabschnitts;
- Fig. 4: eine perspektivisch dargestellte Anordnung zweier Aktoren mit einer schematischen Darstellung der Verschaltung des Verbindungsabschnitts gemäß einer weiteren Ausführungsform;
- Fig. 5: eine perspektivisch dargestellte Explosionszeichnung einer Oszillatorvorrichtung;
- Fig. 6A: eine perspektivische Zusammenbau-Darstellung der Oszillatorvorrichtung gemäß Fig. 5 in einem ersten Zustand;
- Fig. 6B: ein Diagramm eines Strömungsgeschwindigkeitsprofils an den Auslässen der Oszillatorvorrichtung gemäß Fig. 6A;
- Fig. 6C: die Oszillatorvorrichtung gemäß Fig. 6A in einem zweiten Zustand;
- Fig. 6D: ein Diagramm eines Strömungsgeschwindigkeitsprofils an den Auslässen der Oszillatorvorrichtung gemäß Fig. 6C;
- Fig. 7A: eine perspektivische Zusammenbau-Darstellung der Oszillatorvorrichtung gemäß einer weiteren Ausführungsform in einem ersten Zustand;
- Fig. 7B: ein Diagramm eines Strömungsgeschwindigkeitsprofils an den Auslässen der Oszillatorvorrichtung gemäß Fig. 7A;
- Fig. 7C: die Oszillatorvorrichtung gemäß Fig. 7A in einem zweiten Zustand;
- Fig. 7D: ein Diagramm eines Strömungsgeschwindigkeitsprofils an den Auslässen der Oszillatorvorrichtung gemäß Fig. 7C;
- Fig. 8A: eine perspektivische Vorderansicht eines Verbindungsabschnitts für eine Oszillatorvorrichtung gemäß 6A bis D;
- Fig. 8B: eine Rückansicht des Verbindungsabschnitts gemäß Fig. 8A;
- Fig. 8C: eine Querschnittansicht des Verbindungsabschnitts gemäß Fig. 8B entlang der Schnittlinie C;
- Fig. 8D: eine Querschnittansicht des Verbindungsabschnitts gemäß Fig. 8B entlang der Schnittlinie D;
- Fig. 9A: eine perspektivische Ansicht eines Verbindungsabschnitts für eine Oszillatorvorrichtung gemäß Fig. 7A bis D;
- Fig. 9B: eine Vorderansicht des Verbindungsabschnitts gemäß Fig. 9A;
- Fig. 9C: eine Querschnittansicht des Verbindungsabschnitts gemäß Fig. 9B entlang der Schnittlinie C;
- Fig. 9D: eine Querschnittansicht des Verbindungsabschnitts gemäß Fig. 9B entlang der Schnittlinie D;
- Fig. 9E: eine Querschnittansicht des Verbindungsabschnitts gemäß Fig. 9B entlang der Schnittlinie E;
- Fig. 10: eine Längsschnittzeichnung durch eine Oszillatorvorrichtung im Bereich eines Aktors.;
- Fig. 11: eine perspektivische Explosionsdarstellung einer Düsenanordnung;
- Fig. 12: eine perspektivische Explosionsdarstellung einer Oszillatorvorrichtung mit einer Mehrzahl von weiteren Aktoren und Verbindungsabschnitten;
- Fig. 13: eine schematische Darstellung einer Oszillatorvorrichtung mit einem zweiten Verbindungsabschnitt und einem dritten Aktor; und
- Fig. 14: eine schematische Draufsicht auf eine Anordnung paralleler Oszillatorvorrichtungen mit je einer Vielzahl von Aktoren;

In den Figuren bezeichnen dieselben Bezugszeichen gleiche oder funktionsgleiche Komponenten, soweit nichts Gegenteiliges angegeben ist.

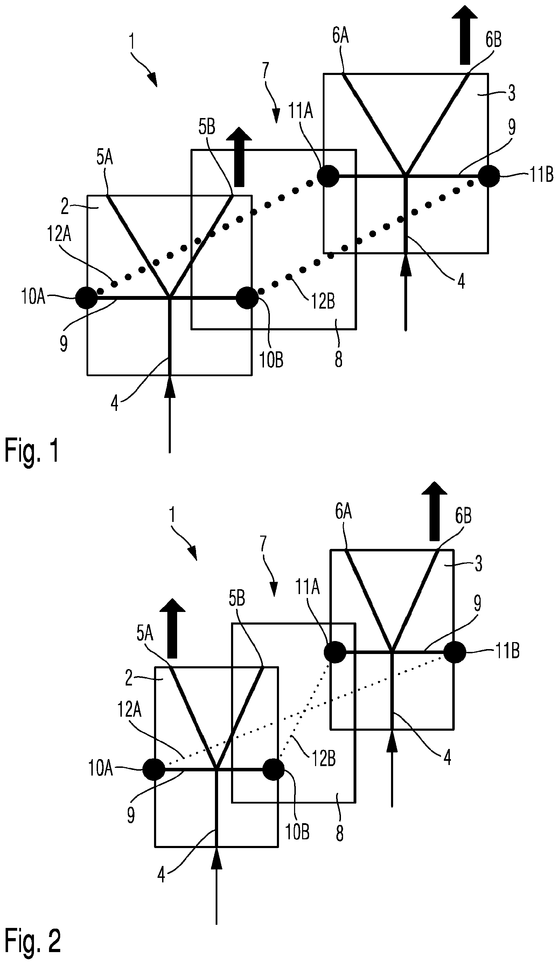

Fig. 1 zeigt eine schematisch dargestellte Oszillatorvorrichtung 1.

Die Oszillatorvorrichtung 1 weist einen ersten fluidischen Aktor 2, einen zweiten fluidischen Aktor 3 sowie einen zwischen den fluidischen Aktoren 2, 3 angeordneten Verbindungsabschnitt 8 auf.

Die fluidischen Aktoren 2, 3 weisen jeweils einen Einlass 4 auf, über welchen der jeweilige Aktor 2, 3 mit Druck versorgt wird. Ferner weist der erste Aktor 2 einen ersten Auslass 5 A und einen zweiten Auslass 5B auf. Ebenfalls weist der zweite Aktor 3 einen ersten Auslass 6A und einen zweiten Auslass 6B auf. Durch die Auslässe der Aktoren 2, 3 ist ein Aktorstrom ausgebbar.

An jedem der Aktoren 2, 3 ist ein als Teil einer fluidischen Steuereinrichtung 7 wirkender Steuerkanal 9 vorgesehen, durch welchen ein Steuerstrom führbar ist. Die fluidische Steuereinrichtung 7 umfasst ferner den Verbindungsabschnitt 8 und dient zur Steuerung einer oszillierenden Ausgabe des Aktorstroms aus den ersten und zweiten Auslässen 5A, 5B bzw. 6A, 6B der Aktoren 2, 3. Der Steuerstrom bestimmt dabei den jeweils aktiven der ersten und zweiten Auslässe 5A, 5B bzw. 6A, 6B des jeweiligen Aktors.

Die Steuerkanäle 9 weisen jeweils einen ersten Anschluss 10A, 11A und einen zweiten Anschluss 10B, 11B auf. Der Verbindungsabschnitt 8 weist ferner einen ersten Verbindungskanal 12A und einen zweiten Verbindungskanal 12B auf. Über diese Verbindungskanäle 12A, 12B werden die Anschlüsse 10A, 10B, 11A, 11B der Steuerkanäle 9 fluidisch miteinander verbunden.

In der hier dargestellten Ausführungsform verbindet der erste Verbindungskanal 12A den ersten Anschluss 10A des Steuerkanals 9 ersten Aktors 2 fluidisch mit dem ersten Anschluss 11A des Steuerkanals 9 des zweiten Aktors 3. Der zweite Verbindungskanal 12B verbindet den zweiten Anschluss 10B des Steuerkanals des ersten Aktors 2 fluidisch mit dem zweiten Anschluss 11B des Steuerkanals 9 des zweiten Aktors 3. Die Steuerkanäle 9 der ersten und zweiten Aktoren 2, 3 sind somit parallel miteinander verschaltet.

Dadurch wird erreicht, dass jeweils an der gleichen Seite der Steuerkanäle parallel ein Über-oder Unterdruck in der Steuereinrichtung 7 herrscht, sodass jeweils die ersten Auslässe 5A, 6A oder die zweiten Auslässe 5B, 6B der Aktoren gleichzeitig aktiv sind. Mit Pfeilen illustriert ist eine gleichzeitige Aktivität des zweiten Auslasses 5B des ersten Aktors 2 und des zweiten Auslasses 6B des zweiten Aktors 3.

Fig. 2 zeigt eine schematisch dargestellte Oszillatorvorrichtung 1 gemäß einer weiteren Ausführungsform.

Die Steuerkanäle 9 der ersten und zweiten Aktoren 2, 3 sind hier im Unterschied zur Ausführungsform gemäß Fig. 1 diagonal verschaltet. Im Übrigen ist der gezeigte Aufbau der Oszillatorvorrichtung 1 gleich zu der in Fig. 1 dargestellten Oszillatorvorrichtung 1.

Diese diagonale bzw. Über-Kreuz-Verschaltung wird dadurch realisiert, dass der erste Verbindungskanal 12A den ersten Anschluss 10A des Steuerkanals 9 des ersten Aktors 2 fluidisch mit dem zweiten Anschluss 11B des Steuerkanals 9 des zweiten Aktors 3 verbindet. Der zweite Verbindungskanal 12B verbindet den zweiten Anschluss 10B des Steuerkanals 9 des ersten Aktors 2 fluidisch mit dem ersten Anschluss 11A des Steuerkanals 9 des zweiten Aktors 3.

Dadurch wird erreicht, dass jeweils an der gegenüberliegenden Seite der Steuerkanäle 9 der jeweiligen Aktoren 2, 3 ein Über-oder Unterdruck in der Steuereinrichtung 7 herrscht. Somit sind jeweils gegenläufige Auslässe 5A, 6B oder 5B, 6A der beiden Aktoren 2, 3 gleichzeitig aktiv. Mit Pfeilen illustriert ist eine gleichzeitige Aktivität des zweiten Auslasses 5B des ersten Aktors 2 und des ersten Auslasses 6A des zweiten Aktors 3.

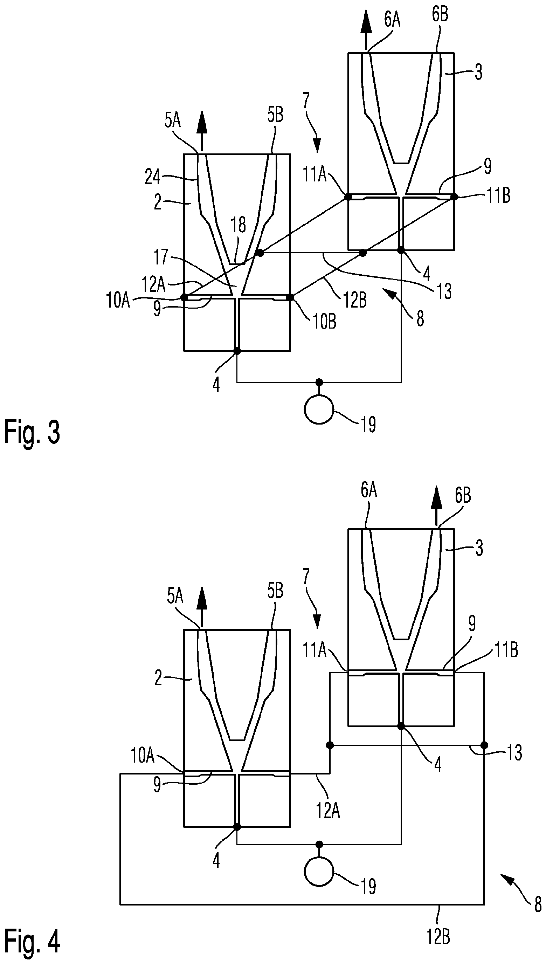

Fig. 3 zeigt eine perspektivisch dargestellte Anordnung zweier Aktoren 2, 3 mit einer schematischen Darstellung der Verschaltung des Verbindungsabschnitts 8.

Zusätzlich zu der Verschaltung des Verbindungsabschnitts 8 ist auch die Verschaltung der Einlässe 4 schematisch dargestellt. Diese sind an eine gemeinsame Druckquelle 19 angeschlossen.

Die Aktoren 2, 3 sind hier im Querschnitt dargestellt, wobei der innere Verlauf der Strömungskanäle und des Steuerkanals 9 ersichtlich sind. Der Verlauf wird im Folgenden exemplarisch anhand des ersten Aktors 2 beschrieben, wobei die beiden Aktoren 2, 3 gleich aufgebaut sind.

Der erste Anschluss 10A des Steuerkanals 9 des ersten Aktors 2 ist an einer ersten Seite des Aktors 2 und der zweite Anschluss 10B des Steuerkanals 9 an einer zweiten Seite des Aktors 2 angeordnet.

Ein Einlass 4 zur Druckversorgung des Aktors 2 ist mittig an dem Aktor 2 angeordnet. Der Einlass 4 mündet in eine gemeinsame Kammer 17, welche von dem Steuerkanal 9 durchquert wird und aus welcher der erste und zweite Auslass 5A, 5B des Aktors 2 in unterschiedlichen Richtungen mit entgegengesetzter Querkomponente heraus geführt sind. Der erste Auslass 5A verläuft dabei aus der Kammer mit einer in der Darstellung nach links gerichteten Richtungskomponente, während der zweite Auslass 5B mit einer Richtungskomponente nach rechts aus der Kammer verläuft.

Die Kammer 17 enthält eine Weicheneinrichtung 18, zum Umlenken eines mittig durch den Einlass 4 eintretenden Druckversorgungsstroms, sodass nach dem Umlenken ein Aktorstrom durch einen der Auslässe 5A, 5B austritt.

Im Verlauf der Auslässe 5A, 5B ist jeweils eine gewölbte Aufweitung 24 vorgesehen. Diese dient zur Homogenisierung des aus dem jeweiligen Auslass ausgegebenen Aktorstroms bzw. Jets.

Im Betrieb erzeugt der Druckversorgungsstrom in dem Steuerkanal 9 einen Unterdruck, wodurch eine fluidische Schwingung der Steuereinrichtung 7 angeregt wird. Aufgrund dieser Schwingung der Steuereinrichtung 7 wechselt ein in dem Steuerkanal 9 strömender Steuerstrom regelmäßig oszillierend seine Strömungsrichtung. Der Steuerstrom tritt dazu quer durch die Kammer 17 hindurch und bestimmt so je nach Stromrichtung des Steuerstroms, den jeweils aktiven Auslass. Der Steuerstrom lenkt dazu den Druckversorgungsstrom in einem Maße ab, welches ausreicht, um ein Umlenken des Druckversorgungsstroms in den ersten Auslass 5A oder in der zweiten Auslass 5B zu bewirken. Somit tritt ein Aktorstrom in einer oszillierenden Weise abwechselnd durch den ersten Auslass 5A und den zweiten Auslass 5B aus.

Bei der hier dargestellten Ausführungsform ist die Steuereinrichtung 7 ebenfalls mit den Steuerkanälen 9 und dem Verbindungsabschnitt 8 gebildet. Die Verbindungskanäle 12A, 12B des Verbindungsabschnitts 8 sind dabei wie bei der Ausführungsform gemäß Figur 1 in paralleler Weise mit den ersten und zweiten Anschlüssen der Steuerkanäle 9 des ersten Aktors 2 und des zweiten Aktors 3 fluidisch verbunden.

Zusätzlich weist der Verbindungsabschnitt 8 bei dieser Ausführungsform einen Bypasskanal 13 auf, welcher eine fluidische Verbindung zwischen dem ersten Verbindungskanal 12A und dem zweiten Verbindungskanal 12B bereitstellt. Der Bypasskanal 13 ist vorgesehen, um eine phasengleiche Oszillation der Aktoren 2, 3 zu ermöglichen. Dazu weist die Verbindung der Verbindungskanäle 12A, 12B über den Bypasskanal 13 eine Dimensionierung, insbesondere eine entsprechende Länge und/oder ein entsprechendes Volumen, auf, welche eine phasengleiche fluidische Schwingung des Systems der gesamten Steuereinrichtung (mit Steuerkanälen, Verbindungskanälen und Bypasskanal) ohne Zeitversatz ermöglicht.

Fig. 4 zeigt eine perspektivisch dargestellte Anordnung zweier Aktoren 2, 3 einer schematischen Darstellung der Verschaltung des Verbindungsabschnitts 8 gemäß einer weiteren Ausführungsform.

Die beiden Aktoren 2, 3 und die Verschaltung der Einlässe 4 sind in gleicher Weise in Bezug auf Fig. 3 geschrieben ausgebildet.

Die Verschaltung des Verbindungsabschnitts 8 unterscheidet sich hier darin, dass die Verbindungskanäle 12A, 12B des Verbindungsabschnitts 8, wie auch bei der Ausführungsform gemäß Figur 2, in diagonaler Weise mit den ersten und zweiten Anschlüssen der Steuerkanäle 9 des ersten Aktors 2 und des zweiten Aktors 3 fluidisch verbunden sind. Zur besseren Übersichtlichkeit ist der zweite Verbindungskanal 12B hier umlaufend anstatt kreuzend eingezeichnet. Es handelt sich jedoch funktional um eine Über-Kreuz-Verschaltung der ersten und zweiten Verbindungskanäle 12A, 12B. Dementsprechend verbindet der Bypasskanal 13 hier die diagonal bzw. über Kreuz verschalteten Verbindungskanäle 12A, 12B.

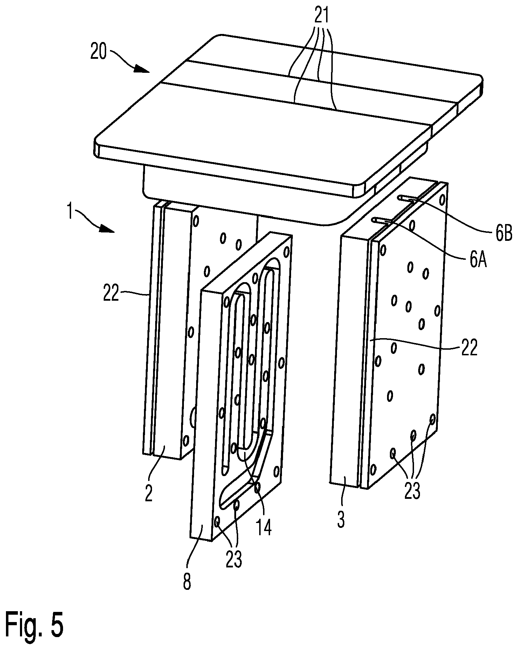

Fig. 5 zeigt eine perspektivisch dargestellte Explosionszeichnung einer Oszillatorvorrichtung 1.

Bei der hier dargestellten Ausführungsform enthält die Oszillatorvorrichtung einen ersten Aktuator 2, einen zweiten Aktuator 3 sowie einen zwischen den Aktoren angeordneten Verbindungsabschnitt 8. Des Weiteren sind die Aktoren 2, 3 nach außen abdeckende Abschluss- oder Anschlussplatten 22 vorgesehen.

Die Aktoren 2, 3 und der Verbindungsabschnitt 8 sind hier als miteinander stapelbare und kraftschlüssig durch Verbindungsbolzen verbindbare Flachteile ausgebildet. Zur kraftschlüssigen Verbindung sind durchgängige Bohrungen 23 in den Abschluss-oder Anschlussplatten 22, in den Aktoren 2, 3 sowie in dem Verbindungsabschnitt 8 vorgesehen.

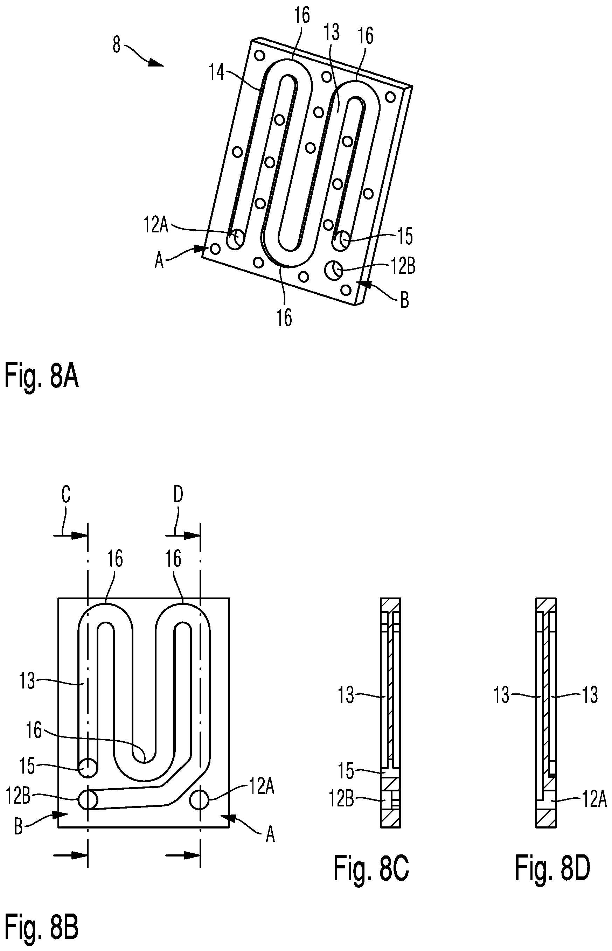

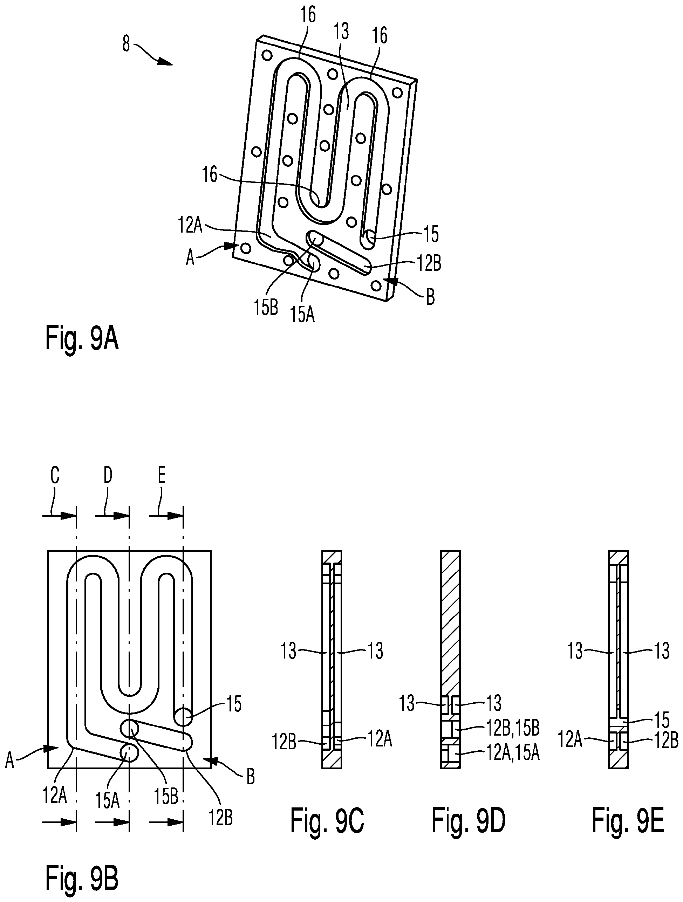

Der Bypasskanal 13 ist in Form einer Nut 14 in den als Flachteil ausgebildeten Verbindungsabschnitt 8 eingebracht, worauf in Bezug auf Figur 8 und 9 näher eingegangen wird. Der Verbindungsabschnitt 8 ist hier beispielhaft gemäß Fig. 3 mit einer parallelen Verschaltung der Steuerkanäle 9 der Aktoren 2, 3 vorgesehen, sodass im Betrieb die ersten Auslässe 5A, 6A und zweiten Auslässe 5B, 6B jeweils gleich geläufig aktiv sind. Alternativ kann auch ein Verbindungsabschnitt 8 mit einer Verschaltung gemäß Fig. 4 mit einer diagonalen Verschaltung vorgesehen sein.

Zudem ist eine Düsenanordnung 20 vorgesehen, welche eine Kanalisierung des Aktorstroms zur Ausgabe als dünner, linienförmiger Strom bzw. Jet durch einen Ausgangsschlitz 21 bereitstellt. Es ist eine der Anzahl der Auslässe der Oszillatorvorrichtung entsprechende Anzahl von Ausgangsschlitzen 21, hier von vier Ausgangsschlitzen 21, vorgesehen.

Die Düsenanordnung 20 ist ausgebildet, um auf diejenige Stirnseite des kraftschlüssigen Verbunds aus Aktoren 2, 3, Verbindungsabschnitt 8 und Abschluss-oder Anschlussplatten 22, welche die Auslässe 5A, 5B, 6A, 6B aufweist, aufgesetzt zu werden. Die Düsenanordnung 20 kann ferner in die Oberfläche eines Strömungskörpers eines Luft oder Raumfahrzeugs zur Realisierung eines Strömungskontrollsystems integriert werden.

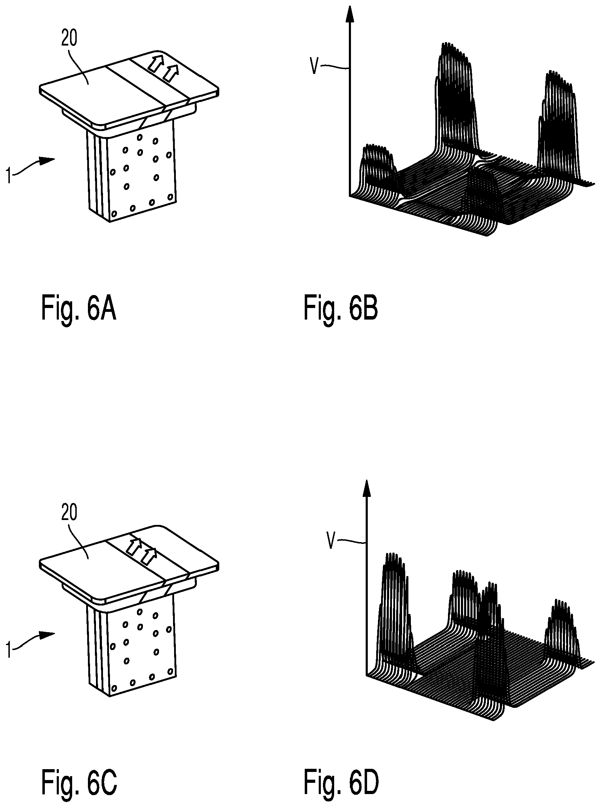

Fig. 6A zeigt eine perspektivische Zusammenbau-Darstellung der Oszillatorvorrichtung gemäß Fig. 5 in einem ersten Zustand.

Die in dem ersten Zustand aktiven Auslässe der Oszillatorvorrichtung 1 sind hier schematisch mit von den Ausgangsschlitzen 21 abgehenden Pfeilen dargestellt, wobei die zweiten Auslässe 5B, 6B phasenhaltig gleichläufig aktiv sind. Dies wird mittels eines die Steuerkanäle 9 der Aktoren 2,3 parallel verschaltenden Verbindungsabschnitte 8 realisiert.

Bei dem ersten Zustand handelt es sich beispielsweise um einen Zustand bei einem Phasenwinkel der Oszillation von 0°.

Fig. 6B zeigt ein Diagramm eines Strömungsgeschwindigkeitsprofils an den Auslässen der Oszillatorvorrichtung gemäß Fig. 6A.

Ein solches Strömungsgeschwindigkeitsprofil wird auch als Ausblas-Muster bezeichnet und ist mittels der sogenannten Heißdraht- oder Hitzdraht-Messmethode, auch Heißdraht Anemometrie genannt, erstellt. Dazu wird ein dünner Metalldraht, welcher an einem Versuchskopf einer Oszillatorvorrichtung 1 befestigt ist, mittels einem konstanten Temperatur Anemometer auf eine Messtemperatur erhitzt, die deutlich oberhalb der Temperatur des Fluids bzw. der Luft des austretenden Aktorstroms liegt. Der Widerstand des dünnen Drahts hängt stark und nahezu linear von der Temperatur des Drahts ab. Dabei ist die Temperatur des Drahtes aufgrund von Kühlungseffekten durch Konvektion eine Funktion der Strömungsgeschwindigkeit v. Wenn der heiße Draht abgekühlt wird, erhöht eine sogenannte Wheatstone-Brücke (Wheatstone'sche Messbrücke) im Versuchsaufbau die an dem Draht anliegende Spannung um wieder die Messtemperatur zu erreichen. Die so messbare Spannungsänderung ist dabei insbesondere direkt proportional zur Änderung der Strömungsgeschwindigkeit v.

Werden eine Vielzahl derartiger Messungen über ein Feld von Messpunkten, beispielsweise von 40 x 40 Messpunkten, vorgenommen, kann daraus ein hier dargestelltes Geschwindigkeitsprofil abgeleitet werden. Die Messung kann dabei beispielsweise mit einer Messvorrichtung erfolgen, die über mehrere Phasen hinweg an den unterschiedlichen Messpunkten positioniert wird.

Dargestellt ist hier das Strömungsgeschwindigkeitsprofil bei einem ersten Phasenwinkel der Oszillation, beispielsweise von 0°. Beispielhaft ist ein solches Strömungsgeschwindigkeitsprofil bei einer Oszillationsfrequenz von 275 Hz und einem Volumenstrom von 120 Liter pro Minute an der Oszillatorvorrichtung messbar.

Erkennbar sind die beiden in Fig. 6A mit Pfeilen gekennzeichneten zweiten Auslässe 5B, 6B hier aktiv und weisen eine deutlich höhere Ausströmgeschwindigkeit v auf, als die beiden ersten Auslässe 5A, 6A.

Fig. 6C zeigt die Oszillatorvorrichtung gemäß Fig. 6A in einem zweiten Zustand.

Dabei liegt der Phasenwinkel der Oszillation um eine halbe Phase gegenüber dem ersten Zustand versetzt, beispielsweise bei 180°.

Schematisch mit von den Ausgangsschlitzen 21 abgehenden Pfeilen dargestellt sind hier die aktiven Auslässe der Oszillatorvorrichtung 1, wobei die ersten Auslässe 5A, 6A phasenhaltig gleichläufig aktiv sind.

Fig. 6D zeigt ein Diagramm eines Strömungsgeschwindigkeitsprofils an den Auslässen der Oszillatorvorrichtung gemäß Fig. 6C.

Dargestellt ist hier das Strömungsgeschwindigkeitsprofil bei dem zweiten Phasenwinkel der Oszillation, beispielsweise von 180°. Erkennbar sind die beiden in Fig. 6C mit Pfeilen gekennzeichneten ersten Auslässe 5A, 6A hier aktiv und weisen dementsprechend eine deutlich höhere Ausströmgeschwindigkeit v auf, als die beiden zweiten Auslässe 5B, 6B.

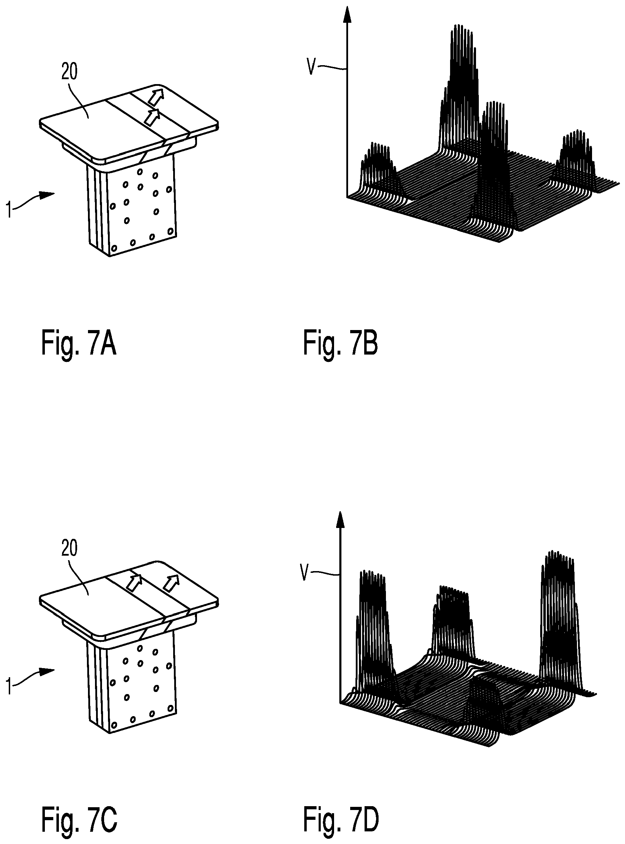

Fig. 7A zeigt eine perspektivische Zusammenbau-Darstellung der Oszillatorvorrichtung 1 gemäß einer weiteren Ausführungsform in einem ersten Zustand.

Gemäß der hier gezeigten Ausführungsform ist ein gegenüber den Fig. 6A bis 6D unterschiedlicher, diagonal verschalteter Verbindungsabschnitt 8, wie er in Bezug auf Fig. 4 beschreiben ist, zwischen den Aktoren 2, 3 angeordnet. Die Auslässe 5A, 5B, 6A, 6B sind hier dementsprechend phasenhaltig gegenläufig aktiv.

Ein Auslass erfolgt somit gleichzeitig jeweils bei einem ersten Phasenwinkel, beispielsweise von 0°, aus dem ersten Auslass 5A des ersten Aktors 2 und dem zweiten Auslass 6B des zweiten Aktors 3 sowie bei einem zweiten Phasenwinkel, beispielsweise von 180°, gleichzeitig aus dem zweiten Auslass 5B des ersten Aktors 2 und dem ersten Auslass 6A des zweiten Aktors 3.

Der hier gezeigte erste Zustand repräsentiert den Zustand des ersten Phasenwinkels der Oszillation, der beispielsweise bei 0° liegt.

Fig. 7B zeigt ein Diagramm eines Strömungsgeschwindigkeitsprofils an den Auslässen der Oszillatorvorrichtung gemäß Fig. 7A.

Dargestellt ist hier dementsprechend das Strömungsgeschwindigkeitsprofil bei dem ersten Phasenwinkel der Oszillation, beispielsweise von 0°. Erkennbar sind die beiden in Fig. 7A mit Pfeilen gekennzeichneten Auslässe 5A, 6B hier aktiv und weisen eine deutlich höhere Ausströmgeschwindigkeit v auf, als die beiden anderen Auslässe 5B, 6A.

Fig. 7C zeigt die Oszillatorvorrichtung gemäß Fig. 7A in einem zweiten Zustand.

In dem dargestellten zweiten Zustand liegt der Phasenwinkel der Oszillation um eine halbe Phase gegenüber dem ersten Zustand versetzt, beispielsweise bei 180°.

Schematisch mit von den Ausgangsschlitzen 21 abgehenden Pfeilen dargestellt sind hier die im zweiten Zustand aktiven Auslässe der Oszillatorvorrichtung 1, wobei es sich um den zweiten Auslass 5B des ersten Aktors und den ersten Auslass 6B des zweiten Aktors handelt.

Fig. 7D zeigt ein Diagramm eines Strömungsgeschwindigkeitsprofils an den Auslässen der Oszillatorvorrichtung gemäß Fig. 7C.

Dargestellt ist hier entsprechend das Strömungsgeschwindigkeitsprofil bei dem zweiten Phasenwinkel der Oszillation, beispielsweise von 180°. Erkennbar sind die beiden in Fig. 7C mit Pfeilen gekennzeichneten Auslässe 5B, 6A hier aktiv und weisen eine deutlich höhere Ausströmgeschwindigkeit v auf, als die beiden anderen Auslässe 5A, 6B.

Fig. 8A zeigt eine perspektivische Vorderansicht eines Verbindungsabschnitts 8 für eine Oszillatorvorrichtung 1 gemäß Fig. 5 und 6A, 6B.

Der Verbindungsabschnitt 8 weist einen ersten Verbindungskanal 12A, einen zweiten Verbindungskanal 12B sowie einen Bypasskanal 13 auf.

Der Verbindungsabschnitt 8 ist, wie in Bezug auf Fig. 5 beschrieben, als Flachteil ausgebildet. Beispielsweise handelt es sich um ein Aluminium-Flachteil, welches zur Herstellung der Geometire der Kanäle beispielsweise spanend bearbeitet ist, insbesondere durch Fräßen. Andere Werkstoffe und andere Fertigungsverfahren sind möglich.

Der erste Verbindungskanal 12A ist an einer ersten Seite A des Verbindungsabschnitts 8 angeordnet und als durchgehende Bohrung ausgebildet. Er ist dazu vorgesehen, einen ersten Anschluss 10A eines Strömungskanals 9 eines ersten Aktors 2 mit einem ersten Anschluss 11A eines Strömungskanals 9 eines zweiten Aktors 3 fluidisch zu verbinden.

Der zweite Verbindungskanal 12B ist an einer zweiten Seite B des Verbindungsabschnitts 8 angeordnet und ebenfalls als durchgehende Bohrung ausgebildet. Er ist dazu vorgesehen, einen zweiten Anschluss 10B eines Strömungskanals 9 eines ersten Aktors 2 mit einem zweiten Anschluss 11B eines Strömungskanals 9 eines zweiten Aktors 3 fluidisch zu verbinden.

Der Bypasskanal 13 verbindet die beiden Verbindungskanäle 12A, 12B und ist als in das Material des als Flachteile ausgebildeten Verbindungsabschnitts 8 eingebrachte, insbesondere eingefräßte, Nut 14 ausgebildet. Die Nut 14 verläuft von dem ersten Verbindungskanal 12A aus mit mehreren Kurven 16 serpentinenartig über die hier dargestellte Vorderseite. Ferner ist ein Durchtritt 15 vorgesehen, durch welchen der Bypasskanal 13 auf eine Rückseite des Verbindungsabschnitts 8 weiterführt. Somit verläuft der Bypasskanal von der ersten Seite A des Verbindungsabschnitt 8 entlang der Vorder- und der Rückseite zur der zweiten Seite B des Verbindungsabschnitts 8.

Fig. 8B zeigt eine Rückansicht des Verbindungsabschnitts gemäß Fig. 8A.

Erkennbar führt der Bypasskanal 13 an der Rückseite zunächst ebenfalls mit mehreren Kurven 16 serpentinenartig über die Rückseite und schließlich zu dem zweiten Verbindungskanal 12B.

Fig. 8C zeigt eine Querschnittansicht des Verbindungsabschnitts gemäß Fig. 8B entlang der Schnittlinie C.

Die Schnittlinie C verläuft durch den an der zweiten Seite B des Verbindungsabschnitts 8 angeordneten, als durchgehende Bohrung ausgebildeten zweiten Verbindungskanal 12B sowie durch den Durchbruch 15. Erkennbar ist ferner der Verlauf des Bypasskanals 13 an der Vorder- und an der Rückseite des als Flachteil ausgebildeten Verbindungsabschnitts 8.

Fig. 8D zeigt eine Querschnittansicht des Verbindungsabschnitts gemäß Fig. 8B entlang der Schnittlinie D.

Die Schnittlinie D verläuft durch den an der ersten Seite A des Verbindungsabschnitts 8 angeordneten, als durchgehende Bohrung ausgebildeten ersten Verbindungskanal 12A. Erkennbar ist verläuft der Bypasskanal 13 auch hier an der Vorder- und an der Rückseite des als Flachteil ausgebildeten Verbindungsabschnitts 8.

Fig. 9A zeigt eine perspektivische Vorderansicht eines Verbindungsabschnitts für eine Oszillatorvorrichtung gemäß Fig. 7A, 7B.

Der Verbindungsabschnitt 8 weist hier ebenfalls einen ersten Verbindungskanal 12A, einen zweiten Verbindungskanal 12B sowie einen Bypasskanal 13 auf. Der Bypasskanal 13 ist bis auf einige geometrische Abweichungen im Wesentlichen gleich wie in Bezug auf die Figuren 8A bis D erläutert mit einem serpentinenartigen Verlauf auf der Vorder- und Rückseite und einem Durchtritt 15Ausgebildet.

Im Unterschied zur Ausführungsform gemäß den Figuren 8A bis D verlaufen die Verbindungskanäle 12A, 12B hier jedoch diagonal bzw. über Kreuz. Somit verläuft der Bypasskanal 13 hier von der ersten Seite A des Verbindungsabschnitt 8 über dessen Vorder-und Rückseite und an der Rückseite wieder zurück zu der ersten Seite A.

Der erste Verbindungskanal 12A verläuft entlang der hier dargestellten Vorderseite des Verbindungsabschnitts 8 von der ersten Seite A des Verbindungsabschnitts 8 zu einem als durchgehende Bohrung ausgebildeten, mittig angeordneten unteren Durchtritt 15A. Von dem unteren Durchtritt 15A verläuft der erste Verbindungskanal 12A entlang der Rückseite des Verbindungsabschnitts 8 weiter bis zu der zweiten Seite B des Verbindungsabschnitts 8. Der erste Verbindungskanal 12A ist folglich dazu vorgesehen, einen ersten Anschluss 10A eines Strömungskanals 9 eines ersten Aktors 2 mit einem zweiten Anschluss 11B eines Strömungskanals 9 eines zweiten Aktors 3 fluidisch zu verbinden.

Der zweite Verbindungskanal 12B verläuft entlang der hier dargestellten Vorderseite des Verbindungsabschnitts 8 zu einem als durchgehende Bohrung ausgebildeten, mittig angeordneten oberen Durchtritt 15B. Von dem oberen Durchtritt 15B verläuft der zweite Verbindungskanal 12B entlang der Rückseite des Verbindungsabschnitts 8 weiter bis zu der ersten Seite A des Verbindungsabschnitts 8. Der zweite Verbindungskanal 12B ist folglich dazu vorgesehen, einen zweiten Anschluss 10B eines Strömungskanals 9 eines ersten Aktors 2 mit einem ersten Anschluss 11A eines Strömungskanals 9 eines zweiten Aktors 3 fluidisch zu verbinden.

Der Bypasskanal 13 verbindet die beiden Verbindungskanäle 12A, 12B jeweils an der ersten Seite A und ist dazu an der Vorderseite mit dem ersten Verbindungskanal 12A und an der Rückseite mit dem zweiten Verbindungskanal 12B verbunden.

Fig. 9B zeigt eine Vorderansicht des Verbindungsabschnitts gemäß Fig. 9A. Es ist somit die gleiche Seite wie in Fig. 9A dargestellt.

Eingezeichnet sind hier die Schnittlinien C, D und E der nachfolgend erläuterten Querschnittansichten.

Fig. 9C zeigt eine Querschnittansicht des Verbindungsabschnitts gemäß Fig. 9B entlang der Schnittlinie C.

Die Schnittlinie C verläuft im Bereich der ersten Seite A des Verbindungsabschnitts. Erkennbar sind hier die beiden Verbindungskanäle 12A und 12B mit dem Bypasskanal 13 verbunden. An der Vorderseite ist dabei der erste Verbindungskanal 12A mit dem Bypasskanal 13 verbunden, wobei an der Rückseite der zweite Verbindungskanal 12B mit dem Bypasskanal 13 verbunden ist.
Fig. 9D zeigt eine Querschnittansicht des Verbindungsabschnitts gemäß Fig. 9B entlang der Schnittlinie D.

Die Schnittlinie D verläuft mittig durch den Verbindungsabschnitt 8 und schneidet somit durch den unteren Durchtritt 15A des ersten Verbindungskanals 12A und durch den oberen Durchtritt 15B des zweiten Verbindungskanals 12B.

Fig. 9E zeigt eine Querschnittansicht des Verbindungsabschnitts gemäß Fig. 9B entlang der Schnittlinie E.

Die Schnittlinie E verläuft im Bereich der zweiten Seite B des Verbindungsabschnitts 8 und schneidet durch den Durchtritt 15 des Bypasskanals 13. An der zweiten Seite B sind die Verbindungskanäle erkennbar nicht mit dem Bypasskanal 13 gekoppelt, sondern lediglich an der ersten Seite A.

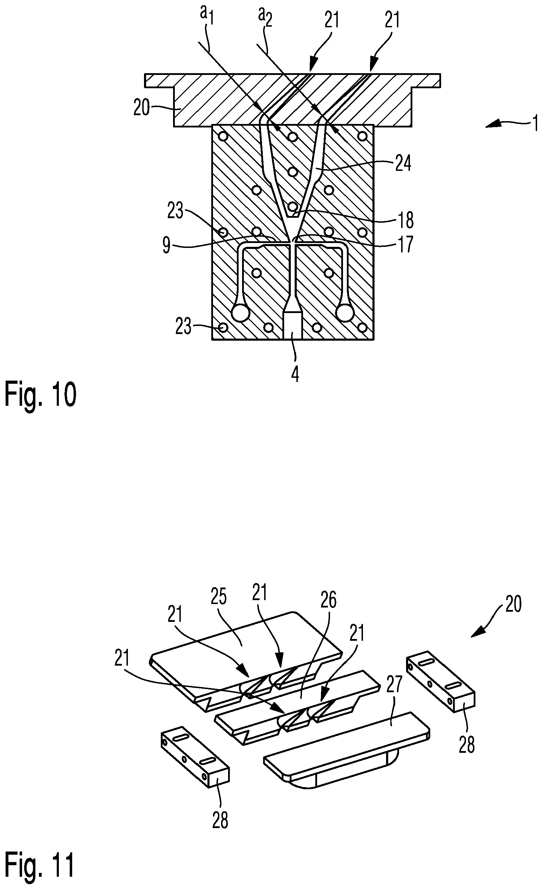

Fig. 10 zeigt eine Längsschnittzeichnung durch eine Oszillatorvorrichtung 1 im Bereich eines Aktors.

Bei den dargestellten Aktor kann es sich um einen ersten Aktor 2, einen zweiten Aktor 3 oder um einen weiteren Aktor der Oszillatorvorrichtung handeln. Die Funktion des Aktors ist dabei gleich wie bereits in Bezug auf Fig. 3 erläutert.

Ferner ist hier der Verlauf zweier Auslässe mit dem Übergang zur Düsenanordnung 20 und deren Verlauf bis zu den Auslassschlitzen 21 dargestellt. Im Bereich der Düsenanordnung 20 wird das Profil des Aktorstroms von einem in etwa rechteckigen Querschnitt zu einem schlitzförmigen Querschnitt verändert. Die gewölbten Aufweitungen 24 in den Auslässen sind vorgesehen, um den Aktorstrom günstigerweise derart zu beeinflussen, dass dieser eine möglichst hohe Homogenität am Austritt aus den Austrittsschlitzen 21 aufweist. Auf diese Weise kann die Effektivität der Oszillatorvorrichtung, insbesondere beim Einsatz in einem Strömungskontrollsystem, verbessert werden.

Die Auslässe weisen im Bereich der Düsenanordnung 20 je einen Durchmesser a1 bzw. a2 eines passierbaren Querschnitts auf. Die Durchmesser a1 und a2 können sich hier geringfügig unterscheiden. In diesem Fall weist einer der Auslässe einen geringfügig größeren passierbaren Querschnitt auf, als der andere. Ein solcher Unterschied des passierbaren Querschnitts bewirkt auch einen etwas geringeren fluidischen Widerstand des größeren Auslasses als bei dem anderen Auslass. Der geringere fluidische Widerstand des Auslasses stellt wiederum eine Startauslass-Ausbildung dar, welche vorgesehen ist, um den Aktorstrom bei Beginn einer Druckbeaufschlagung des Aktors durch diesen Auslass austreten zu lassen. Die Startauslass-Ausbildung ist somit in die auf den Aktor aufgesetzte Düsenanordnung integriert.

Die Startauslass-Ausbildung definiert bei Beginn der Druckbeaufschlagung einen Startzustand des Aktorstroms, in welchem der Aktorstrom überwiegend aus dem mit der Startauslass-Ausbildung versehenen Auslass austritt. Sie ist vorgesehen, da bei Beginn der Druckbeaufschlagung des Aktors noch kein Steuerstrom in der Steuereinrichtung vorliegt. Der Steuerstrom wird erst durch Druckversorgungsstrom angeregt, wobei die Steuereinrichtung in fluidische Schwingung versetzt wird.

Dargestellt ist hier ferner die Position der Anschlüsse des Steuerkanals 9. Diese liegen auf gleicher Höhe mit den Verbindungskanälen 12A, 12B gemäß den Figuren 8A bis D oder 9A bis E. Eine Verbindung der Verbindungskanäle 12A, 12B mit den Anschlüssen des Steuerkanals 9 ist daher bei einer Stapelung eines Verbindungsabschnitts 8 mit dem Aktor automatisch gegeben. Eine Abdichtung kann dabei bereits durch einen festen Kraftschluss mittels durch die Bohrungen 23 geführter Verbindungsbolzen erfolgen. Gegebenenfalls kann zusätzlich noch eine Dichtung oder ein Dichtmittel zwischen dem Verbindungsabschnitt 8 und dem Aktor vorgesehen sein kann.

Fig. 11 zeigt eine perspektivische Explosionsdarstellung einer Düsenanordnung.

Es handelt sich um eine mehrteilige Düsenanordnung 20, welche zwei Außenteile 25, 27 einen Mittelteil 26 sowie zwei Verbinder 28 aufweist. Die einzelnen Teile der Düsenanordnung können beispielhaft mittels selektivem Lasersintern, beispielsweise aus Polyamid, hergestellt sein. Andere Werkstoffe und andere Fertigungsverfahren sind möglich.

Die Düsenkontur ist in die Seitenflächen der Außenteile 25, 27 und des Mittelteils 26 eingebracht, insbesondere eingefräßt. Die Außenteile 25, 27 und der Mittelteil 26 können miteinander kraftschlüssig verbunden, insbesondere verschraubt, werden.
Die Verbinder 28 sind ausgebildet, um eine Verbindung zwischen der Düsenanordnung 20 und dem kraftschlüssig verbundenen Paket aus Aktoren 2, 3 und Verbindungsabschnitten 8 bereitzustellen. Die Verbinder 28 können dazu mit der Düsenanordnung 20 und dem Paket aus Aktoren 2, 3 und Verbindungsabschnitten 8 in unterschiedlicher Richtungen kraftschlüssig verbunden, insbesondere verschraubt, werden.

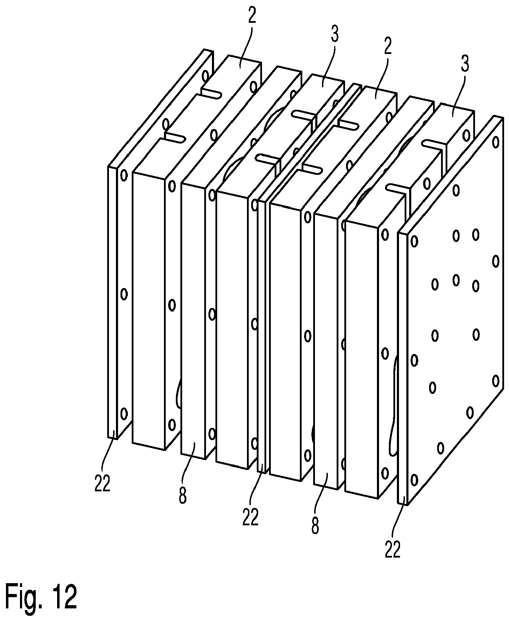

Fig. 12 zeigt eine perspektivische Explosionsdarstellung einer Oszillatorvorrichtung 1 mit einer Mehrzahl von weiteren Aktoren 2, 3 und Verbindungsabschnitten 8.

Dargestellt sind zwei gestapelte Pakete mit je einem ersten und einem zweiten Aktor 2, 3, einem dazwischen angeordneten Verbindungsabschnitt 8 sowie zwei außenseitigen und einer zwischen den Paketen, insbesondere zwischen dem zweiten Aktor eines ersten Pakets und dem ersten Aktor eines zweiten Pakets, angeordneten Abschluss- oder Anschlussplatte 22.

Die Oszillatorvorrichtung 1 ist mit einer beliebigen Anzahl weiterer Pakete erweiterbar.

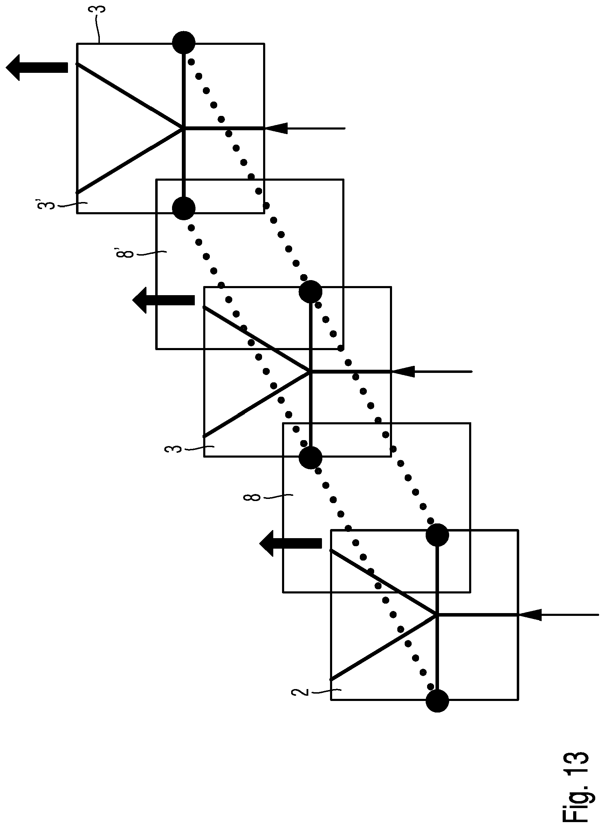

Fig. 13 zeigt eine schematische Darstellung einer Oszillatorvorrichtung 1 mit einem zweiten Verbindungsabschnitt 8' und einem dritten Aktor 3'.

Die hier dargestellte Oszillatorvorrichtung 1 basiert auf der in Bezug auf Figur 1 beschriebene Oszillatorvorrichtung 1 und ist um einen zweiten Verbindungsabschnitt 8' und einen dritten Aktor 3' erweitert. Der zweite Verbindungsabschnitt ist dabei zwischen dem zweiten Aktor 3 und dem dritten Aktor 3' angeordnet und verbindet diese fluidisch miteinander.

Es können dabei auch gemäß den Figuren 3 oder 4 verschaltete Verbindungsabschnitte 8 als erster und/oder zweiter Verbindungsabschnitt 8, 8' vorgesehen sein. Ferner ist eine weitere Erweiterung mit einem oder mehreren weiteren Verbindungsabschnitten und einem oder mehreren weiteren Aktoren möglich.

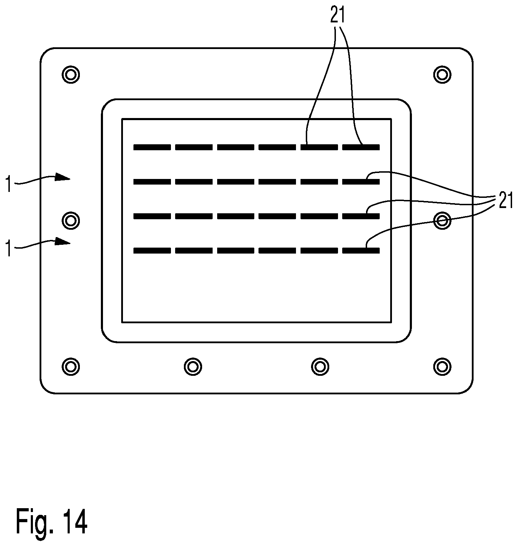

Fig. 14 zeigt eine schematische Draufsicht auf eine Anordnung paralleler Oszillatorvorrichtungen 1 mit je einer Vielzahl Aktoren.

Dargestellt sind hier lediglich die Auslassschlitze 21 der jeweiligen Düsenanordnungen 20 der parallelen Oszillatorvorrichtungen 1. Durch eine entsprechende Auslegung der Verbindungsabschnitte 8 können mit der parallelen oder nachgelagerten Anordnung der Oszillatorvorrichtungen 1 vielfältige Ausblas-Muster erzeugt werden. Mittels Strömungsmessung können damit ferner auch kohärente Strukturen und Einflüssen auf den Luftstrom der Oszillatorvorrichtungen untersucht werden.

Obwohl die vorliegende Erfindung anhand bevorzugter Ausführungsbeispiele vorliegend beschrieben wurde, ist sie darauf nicht beschränkt, sondern auf vielfältige Weise modifizierbar.

### Bezugszeichenliste

- 1: Oszillatorvorrichtung
- 2: erster fluidischer Aktor
- 3: zweiter fluidischer Aktor
- 3': dritter fluidischer Aktor
- 4: Einlass
- 5A, 6A: erster Auslass
- 5B, 6B: zweiter Auslass
- 7: Steuereinrichtung
- 8: Verbindungsabschnitt
- 8': zweiter Verbindungsabschnitt in
- 9: Steuerkanal
- 10A, 11A: erster Anschluss
- 10B, 11B: zweiter Anschluss
- 12A: erste Verbindungskanal
- 12B: zweiter Verbindungskanal
- 13: Bypasskanal
- 14: Nut
- 15: Durchtritt
- 15A: unterer Durchtritt
- 15B: oberer Durchtritt
- 16: Kurve
- 17: Kammer
- 18: Weicheneinrichtung
- 19: Druckquelle
- 20: Düsenanordnung
- 21: Ausgangsschlitz
- 22: Abschluss- oder Anschlussplatte
- 23: Bohrung
- 24: Aufweitung
- 25,27: Außenteile
- 26: Mittelteil
- 28: Verbinder

- a1, a2: passierbarer Querschnitt
- A: erste Seite
- B: zweite Seite
- C-E: Schnittlinien

- v: Ausströmgeschwindigkeit

## Patentansprüche

1. Fluidische Oszillatorvorrichtung (1), insbesondere für ein oder in einem Strömungskontrollsystem für ein Luft- oder Raumfahrzeug, mit:
einem ersten fluidischen Aktor (2) und einem zweiten fluidischen Aktor (3),
wobei jeder der Aktoren (2, 3) einen Einlass (4) zur Druckversorgung und einen ersten und einen zweiten Auslass (5A, 5B, 6A, 6B) aufweist, aus welchen ein Aktorstrom ausgebbar ist; und
einer fluidischen Steuereinrichtung (7) zur Steuerung einer oszillierenden Ausgabe des Aktorstroms aus dem ersten und zweiten Auslass (5A, 5B, 6A,
6B) der Aktoren (2, 3), wobei die Steuereinrichtung (7) einen Verbindungsabschnitt (8) aufweist, welcher zwischen dem ersten Aktor (2) und dem zweiten Aktor (3) angeordnet ist.

2. Fluidische Oszillatorvorrichtung nach Anspruch 1,
**dadurch gekennzeichnet,**
**dass** die Steuereinrichtung (7) an jedem Aktor (2, 3) einen Steuerkanal (9) umfasst, wobei ein durch den Steuerkanal (9) führbarer Steuerstrom den jeweils aktiven Auslass (5A; 5B; 6A; 6B) des Aktors (2; 3) bestimmt, wobei die Steuerkanäle (9) an den Aktoren (2, 3) jeweils einen ersten und einen zweiten Anschluss (10A, 10B, 11A, 11B) aufweisen und wobei der Verbindungsabschnitt (8) einen ersten und einen zweiten Verbindungskanal (12A, 12B) aufweist, welche die Anschlüsse (10A, 10B, 11A, 11B) der Steuerkanäle (9) fluidisch miteinander verbinden.

3. Fluidische Oszillatorvorrichtung nach Anspruch 2,
**dadurch gekennzeichnet,**
**dass** der Verbindungsabschnitt (8) ferner einen Bypasskanal (13) aufweist, welcher eine fluidische Verbindung zwischen dem ersten und dem zweiten Verbindungskanal (12A, 12B) bereitstellt und derart ausgebildet ist, dass die Aktoren (2, 3) und die Steuereinrichtung (7) mit einer Oszillationsfrequenz, insbesondere einer gemeinsamen Oszillationsfrequenz, betreibbar sind.

4. Fluidische Oszillatorvorrichtung nach Anspruch 2 oder 3,
**dadurch gekennzeichnet,**
**dass** die Aktoren (2, 3) und/oder der Verbindungsabschnitt (8) als Flachteile, insbesondere als kraftschlüssig miteinander verbundene Flachteile, ausgebildet sind.

5. Fluidische Oszillatorvorrichtung nach Anspruch 4,
**dadurch gekennzeichnet,**
**dass** der Bypasskanal (13) als in den als Flachteil ausgebildeten Verbindungsabschnitt (8) eingebrachte Nut (14) ausgebildet ist.

6. Fluidische Oszillatorvorrichtung nach Anspruch 5,
**dadurch gekennzeichnet,**
**dass** die Nut (14) sowohl an einer ersten als auch an einer zweiten Seite des Flachteils verläuft, wobei ein Durchtritt (15) durch das Flachteil vorgesehen ist.

7. Fluidische Oszillatorvorrichtung nach einem der vorangehenden Ansprüche 2 bis 6,
**dadurch gekennzeichnet,**
**dass** der Bypasskanal zumindest eine Kurve (16), insbesondere eine Mehrzahl serpentinenartig angeordneter Kurven (16), beschreibt.

8. Fluidische Oszillatorvorrichtung nach wenigstens einem der Ansprüche 2 bis 7,
**dadurch gekennzeichnet,**
**dass** der erste Anschluss (10A; 11A) des Steuerkanals (9) an einer ersten Seite des jeweiligen Aktors (2; 3) und der zweite Anschluss (10B; 11B) des Steuerkanals (9) an einer zweiten Seite des jeweiligen Aktors (2; 3) angeordnet ist.

9. Fluidische Oszillatorvorrichtung nach wenigstens einem der Ansprüche 2 bis 8,
**dadurch gekennzeichnet,**
**dass** der erste Anschluss (10A) des Steuerkanals (9) des ersten Aktors (2) über den ersten Verbindungskanal (12A) des Verbindungsabschnitts (8) mit dem ersten Anschluss (11A) des Steuerkanals (9) des zweiten Aktors (3) verbunden ist und/oder der zweite Anschluss (10B) des Steuerkanals (9) des ersten Aktors (2) über den zweiten Verbindungskanal (12B) des Verbindungsabschnitts (8) mit dem zweiten Anschluss (11B) des Steuerkanals (9) des zweiten Aktors (3) verbunden ist.

10. Fluidische Oszillatorvorrichtung nach Anspruch 9,
**dadurch gekennzeichnet,**
**dass** der erste Verbindungskanal (12A) an einer ersten Seite des Verbindungsabschnitts (8) durch den Verbindungsabschnitt (8) führt und/oder der zweite Verbindungskanal (12B) an einer zweiten Seite des Verbindungsabschnitts (8) durch den Verbindungsabschnitt (8) führt.

11. Fluidische Oszillatorvorrichtung nach wenigstens einem der Ansprüche 2 bis 8,
**dadurch gekennzeichnet,**
**dass** der erste Anschluss (10A) des Steuerkanals (9) des ersten Aktors (2) über den ersten Verbindungskanal (12A) des Verbindungsabschnitts (8) mit dem zweiten Anschluss (11B) des Steuerkanals (9) des zweiten Aktors (3) verbunden ist und/oder der zweite Anschluss (10B) des Steuerkanals (9) des ersten Aktors (2) über den zweiten Verbindungskanal (12B) des Verbindungsabschnitts (8) mit dem ersten Anschluss (11A) des Steuerkanals (9) des zweiten Aktors (3) verbunden ist.

12. Fluidische Oszillatorvorrichtung nach Anspruch 11,
**dadurch gekennzeichnet,**
**dass** der erste Verbindungskanal (12A) von einer ersten Seite des Verbindungsabschnitts (8) zu einer zweiten Seite durch den Verbindungsabschnitt (8) führt und/oder der zweite Verbindungskanal (12B) von der zweiten Seite des Verbindungsabschnitts (8) zu der ersten Seite durch den Verbindungsabschnitt (8) führt.

13. Fluidische Oszillatorvorrichtung nach einem der vorangehenden Ansprüche,
**dadurch gekennzeichnet,**
**dass** zumindest ein dritter fluidischer Aktor (3') und zumindest ein zweiter Verbindungsabschnitt (8') vorgesehen sind, wobei der zweite Verbindungsabschnitt (8') zwischen dem zweiten Aktor (3) und dem dritten Aktor (3') angeordnet ist und diese fluidisch miteinander verbindet und/oder dass eine Mehrzahl weiterer fluidischer Aktoren (2, 3; 3') und eine Mehrzahl weiterer Verbindungsabschnitte (8; 8') vorgesehen sind, wobei jeweils einer der weiteren Verbindungsabschnitte (8; 8') zwischen jeweils zwei der weiteren Aktoren (2, 3; 3') angeordnet ist und diese fluidisch miteinander verbindet.

14. Fluidische Oszillatorvorrichtung, (insbesondere) nach einem der vorangehenden Ansprüche,
**dadurch gekennzeichnet,**
**dass** bei zumindest einem der Aktoren (2; 3) einer der Auslässe (5A; 5B; 6A; 6B) eine Startauslass-Ausbildung aufweist, welche den Aktorstrom bei Beginn einer Druckbeaufschlagung des Aktors (2; 3) zumindest überwiegend durch diesen Auslass (5A; 5B; 6A; 6B) austreten lässt.

15. Fluidische Oszillatorvorrichtung nach Anspruch 14,
**dadurch gekennzeichnet,**
**dass** die Startauslass-Ausbildung einen geringeren fluidischen Widerstand, insbesondere einen größeren passierbaren Querschnitt (a1; a2), als die Ausbildung des anderen Auslasses des Aktors (2; 3) umfasst.
